# EUROPÄISCHE PATENTANMELDUNG

(11) **EP 0 702 217 A1**
(43) Veröffentlichungstag der Anmeldung: **20.03.1996**
(21) Anmeldenummer: 95113145.7
(22) Anmeldetag: 22.08.1995
(51) Int. Cl.: G01G 23/01

(54) **Vorrichtung zum Kalibrieren von Waagen**

(30) Priorität: 17.09.1994 DE 4433163
(71) Anmelder: ROBERT BOSCH GMBH, D-70442 Stuttgart (DE)
(72) Erfinder: Hoss, Reinhard, Dipl.-Ing., D-73207 Plochingen (DE); Peiler, Jürgen Student, D-72644 Oberboihingen (DE)

(57) **Zusammenfassung**

Es wird eine Vorrichtung zum Kalibrieren von Waagen (10) vorgeschlagen, die eine mit einer Bezugsmasse der Waage (10) verbundenes Widerlager (13) und ein zwischen dem Widerlager (13) und der Waage (10) angeordnetes kraftausübendes Element (14) enthält. Das kraftausübende Element (14), beispielsweise ein Wagenheber eines Kraftfahrzeugs, übt auf die Waage (10) eine vorgegebene Kraft aus, die von einer Kraftmeßeinrichtung (22) erfaßt wird. Die erfaßte Kraft ist ein Maß für das von der Waage (10) zu ermittelnde Gewicht oder die zu ermittelnde Masse.

Die erfindungsgemäße Vorrichtung ist insbesondere zum Kalibrieren von Waagen (10) geeignet, die ein vergleichsweise hohes Gewicht zu ermitteln haben. Eine bevorzugte Anwendung ist in einem Rollenprüfstand (11) für Kraftfahrzeuge gegeben.

## Beschreibung

### Stand der Technik

Die Erfindung geht aus von einer Vorrichtung zum Kalibrieren von Waagen nach der Gattung des Hauptanspruchs. Grundsätzlich ist eine Waage als Meßinstrument für die Masse oder das Gewicht eines zu wiegenden Körpers vor dem Einsatz zu Kalibrieren. Gesetzliche Vorschriften können eine Kalibrierung nicht nur bei der Inbetriebnahme, sondern auch in regelmäßigen zeitlichen Abständen fordern. Zum Kalibrieren von Waagen, die zum Ermitteln des Gewichts oder der Masse von Körpern vorgesehen sind, deren Masse bei einigen Kilogramm liegt, können problemlos einfach handzuhabende Kalibriergewichte verwendet werden. Bei Waagen, welche die Masse oder das Gewicht von Körpern erfassen sollen, die eine Masse von mehreren tausend Kilogramm aufweisen, ist die Kalibrierung durch die erforderliche Bereitstellung von entsprechend schweren Kalibriergewichten aufwendiger. Zum Transport derart schwerer Kalibriergewichte ist beispielsweise ein Gabelstapler bereitzustellen, dessen Einsatz den Kalibriervorgang weiter verteuert.

Der Erfindung liegt die Aufgabe zugrunde, eine Vorrichtung anzugeben, die mit einfachen Mitteln kosten- und zeitgünstig das Kalibrieren von Waagen ermöglicht.

Die Aufgabe wird durch die im Hauptanspruch angegebenen Merkmale gelöst.

### Vorteile der Erfindung

Die erfindungsgemäße Vorrichtung weist den Vorteil auf, daß keine Prüfgewichte erforderlich sind. Der Vorteil macht sich insbesondere bemerkbar beim Kalibrieren von Waagen, die ein Gewicht oder eine Masse eines Körpers ermitteln sollen, der eine Masse von mehreren tausend Kilogramm aufweisen kann.

Erfindungsgemäß sind ein mit der Bezugsmasse der Waage fest verbundenes Widerlager und ein zwischen dem Widerlager und der Waage angeordnetes kraftausübendes Element vorgesehen. Das kraftausübende Element übt eine vorgegebene Kraft auf die Waage aus, die mit einer Kraftmeßeinrichtung erfaßt wird. Die von der Kraftmeßeinrichtung ermittelte Kraft ist ein Maß für das von der Waage zu ermittelnde Gewicht oder die Masse. Der von der Waage ermittelte Wert ist demnach in Abhängigkeit von der von der Kraftmeßeinrichtung ermittelten Kraft einzustellen.

Vorteilhafte Weiterbildungen und Ausgestaltungen der erfindungsgemäßen Vorrichtung ergeben sich aus abhängigen Ansprüchen.

Eine vorteilhafte Ausgestaltung betrifft das Widerlager, das vorzugsweise als Brückenträger ausgebildet ist. Ein Brückenträger bietet die Möglichkeit, anstelle einer einzigen Verbindung mit der Bezugsmasse der Waage zwei unabhängige Verbindungen bereitzustellen. Mit zwei Verbindungen ergeben sich vorteilhaftere Kraftverteilungen und Spannungsverhältnisse im Material des Brückenträgers, dessen konstruktiver Aufbau daher einfach und gewichtssparend ausgeführt werden kann. Das Widerlager oder der Brückenträger sind vorzugsweise mit dem Fundament eines Gebäudes verbindbar, welches gleichzeitig die Bezugsmasse der Waage ist.

Eine andere vorteilhafte Ausgestaltung betrifft das kraftausübende Element, das beispielsweise als Wagenheber eines Kraftfahrzeugs ausgestaltet ist. Wagenheber, welche in der Lage sind, die erforderliche hohe Kraft aufzubringen, sind als Massenware preisgünstig erhältlich.

Die erfindungsgemäße Vorrichtung ist beispielsweise geeignet zum Kalibrieren einer Waage, die in einem Rollenprüfstand angeordnet ist, der zum Überprüfen von Teilen eines Kraftfahrzeugs vogesehen ist. Sofern eine Waage mehr als einer Rolle zugeordnet ist, kann eine gegebenenfalls vorhandene Höhendifferenz zwischen den Rollen mit einem Niveauausgleichsteil ausgeglichen werden. Der Niveauausgleich wird vorzugsweise mittels einer Einstellschraube vorgenommen.

Weitere vorteihafte Ausgestaltungen und Weiterbildungen der erfindungsgemäßen Vorrichtung zum Kalibrieren von Waagen ergeben sich aus weiteren abhängigen Ansprüchen und aus der folgenden Beschreibung.

### Zeichnung

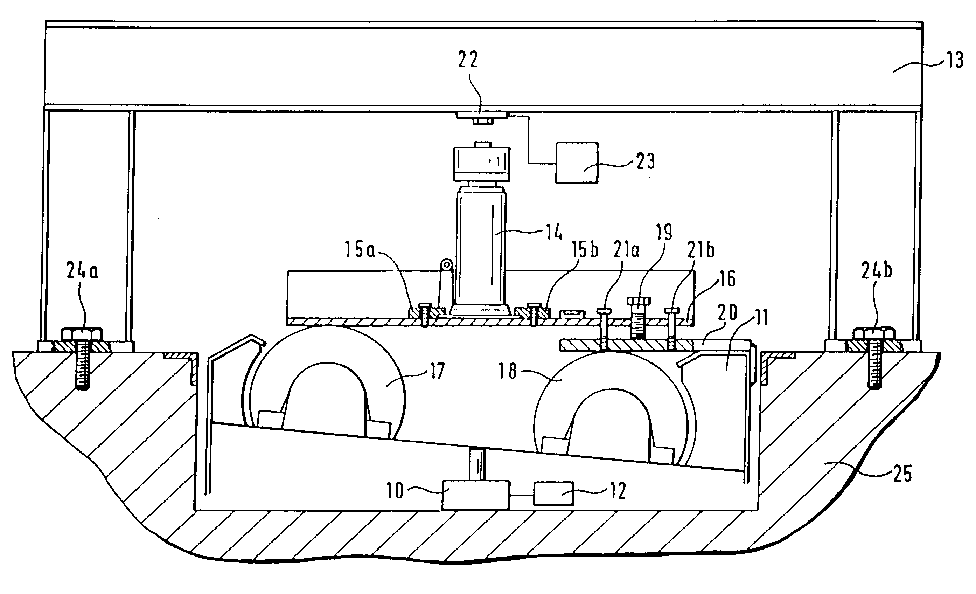

Die Figur zeigt eine zu kalibrierende Waage, die beispielhaft in einem Rollenprüfstand angeordnet ist.

Die Figur zeigt eine Waage 10, die in einem Rollenprüfstand 11 für Kraftfahrzeuge angeordnet ist. Die Waage 10 gibt über eine Ausgabeeinheit 12 einen Wert aus, der ein Maß für das Gewicht oder die Masse des Rollenprüfstands 11 und zumindest eines Teils eines in der Figur nicht gezeigten Kraftfahrzeugs ist, das in den Rollenprüfstand 11 mit zumindest einem oder beiden Rädern zumindest einer Achse eingefahren ist.

Zum Kalibrieren der Waage 10 ist ein Widerlager 13 vorgesehen, das als Brückenträger ausgebildet ist. Zwischen dem Brückenträger 13 und der Waage 10 ist ein kraftausübendes Element 14 angeordnet, das beispielhaft als Wagenheber eines Kraftfahrzeugs realisiert ist. Der Wagenheber 14 ist mit einer Befestigungseinrichtung 15a, 15b verbunden mit einem Niveauausgleichsteil 16, das einen Höhenunterschied zwischen einer ersten Rolle 17 und einer zweiten Rolle 18 des Rollenprüfstands 11 ausgleicht. Zum Herstellen des Niveauausgleichs ist eine Einstellschraube 19 vorgesehen, die den Abstand zwischen dem Niveauausgleichsteil 16 und der zweiten Rolle 18 zu variieren gestattet. Im gezeigten Ausführungsbeispiel ist zwischen der Einstellschraube 19 und der zweiten Rolle 18 eine Auflage 20 vorgesehen, wobei zwischen der Auflage 20 und dem Niveauausgleichsteil 16 zwei Führungen 21a, 21b vorgesehen sind.

Der Wagenheber 14 kann eine Druckkraft auf eine Kraftmeßeinrichtung 22 ausüben, die den erfaßten Wert über eine Ausgabeanordnung 23 ausgibt.

Das als Brückenträger ausgebildete Widerlager 13 ist über Schraubverbindungen 24a, 24b mit einem Fundament 25 verschraubt, welches gleichzeitig die Bezugsmasse der Waage 10 darstellt, gegen die das Gewicht oder die Masse ermittelt wird.

Die erfindungsgemäße Vorrichtung zum Kalibrieren von Waagen 10 arbeitet folgendermaßen:
Im gezeigten Ausführungsbeispiel ist die Waage 10 beispielhaft in einem Rollenprüfstand 11 für ein Kraftfahrzeug angeordnet. Der Rollenprüfstand 11 enthält die erste und zweite Rolle 17, 18, die einen oder mehrere Reifen an einer Achse eines Kraftfahrzeugs tragen. Der Rollenprüfstand 11 kann mehrere solcher in der Figur gezeigten Rollen 17, 18 enthalten. Im gezeigten Ausführungsbeispiel erfaßt die Waage 10, das Gewicht oder die Masse sowohl vom Prüfstand 11 als auch zumindest teilweise von dem nicht gezeigten Kraftfahrzeug. Alternativ ist es möglich, daß die Waage 10 unmittelbar das Gewicht oder die Masse des Prüfstands 11 nicht miterfaßt, wobei unmittelbar ein Kontakt zwischen der Waage 10 und dem Reifen herzustellen ist.

Die im gezeigten Ausführungsbeispiel vorhandene Waage 10 kann mit einer Masse beaufschlagt werden, die mehrere tausend Kilogramm beträgt. Ein Kalibrieren der Waage 10, beispielsweise mit Prüfgewichten, die eine entsprechende Masse aufweisen müssen, ist entsprechend aufwendig. Prüfgewichte mit einer derart hohen Masse können nur noch durch den Einsatz von Maschinen, beispielsweise von einem Gabelstapler, bewegt werden. Die erfindungsgemäße Vorrichtung zum Kalibrieren von Waagen 10 ermöglicht dagegen eine kostengünstige Kalibrierung, zu deren Durchführung lediglich eine Bedienperson erforderlich ist, die ohne den Einsatz von zusätzlichen Maschinen die Kalibrierung vornehmen kann.

Erfindungsgemäß ist das Widerlager 13 vorgesehen, das im gezeigten Ausführungsbeispiel als Brückenträger realisiert ist. Das Widerlager 13 wird auf beiden Seiten des Rollenprüfstands 11 mit dem Fundament 25 verbunden. Geeignet sind die in der Figur eingetragenen Verschraubungen 24a, 24b, die bei der Herstellung des Fundaments 25 mit einfachen Mitteln vorzubereiten sind. Das Fundament 25 bildet gleichzeitig die Bezugsmasse für die Waage 10, gegen die, das Gewicht oder die Masse zu ermitteln sind. Zwischen der Waage 10 und dem Widerlager 13 ist das kraftausübende Element 14 angeordnet, das vorzugsweise als Wagenheber eines Kraftfahrzeugs realisiert ist. Derartige Wagenheber sind in der Lage, die erforderliche Kraft bereitzustellen, wobei die Kosten für einen solchen Wagenheber äußerst gering sind. Der Wagenheber 14 ist gegebenenfalls über die Befestigungseinrichtung 15a, 15b mit dem Niveauausgleichsteil 16 fest verbunden.

Das Niveauausgleichsteil 16 ist vorgesehen, um einen Höhenunterschied zwischen der ersten und zweiten Rolle 17, 18 ausgleichen zu können. Der Höhenunterschied wird mit der Einstellschraube 19 vorgenommen, die gegen die Auflage 20 wirkt, wobei die Auflage 20 und das Niveauausgleichsteil 16 mit den Führungen 21a, 21b beweglich gegeneinander geführt verbunden sind. Sofern lediglich eine Rolle 17, 18 vorgesehen ist, reicht der Einsatz der Auflage 20 bereits aus, auf dem der Wagenheber 14 anzuordnen ist.

Zum Kalibrieren der Waage 10 wird der Wagenheber 14 betätigt, bis er eine vorgegebene Kraft erzeugt, welche die Kraftmeßeinrichtung 22 erfaßt und über die Ausgabeanordnung 23 beispielsweise anzeigt. Die Kraftmesseinrichtung 22 kann sowohl fest am Widerlager 14 angeordnet als auch lose dazwischengelegt sein. Die vorgegebene Kraft ist ein Maß für das auf die Waage 10 wirkende Gewicht, wobei das bekannte Eigengewicht des Rollenprüfstands 11 sowie das der zum Kalibrieren der Waage 10 erforderlichen Teile wie beispielsweise des Wagenhebers 14, des Niveauausgleichsteils 16 und der Auflage 20 zu addieren sind. Diese Nullpunktjustierung kann über eine nicht näher gezeigte signalverarbeitende Anordnung vorgenommen werden. Die über die Ausgabeanordnung 23 ausgegebene Kraft ist daher ein Maß für das von der Waage 10 zu ermittelnde Gewicht, das in Abhängigkeit von der Ausgestaltung der Waage 10 als Gewichtskraft oder als Masse ermittelt wird und über die Ausgabeeinheit 12 beispielsweise angezeigt wird.

Nach dem Kalibrieren der Waage 10 werden das Widerlager 13, das Niveauausgleichsteil 16 mit dem Waagenheber 14 sowie die Auflage 20 entfernt und der Rollenprüfstand 11 steht sofort für die weiteren Meßaufgaben zur Verfügung.

## Patentansprüche

1. Vorrichtung zum Kalibrieren von Waagen, mit einem mit einer Bezugsmasse der Waage (10) verbundenen Widerlager (13), mit einem zwischen dem Widerlager (13) und der Waage (10) angeordneten kraftausübenden Element (14), welches eine vorgegebene Kraft auf die Waage (10) ausübt, und mit einer Kraftmeßeinrichtung (22) zum Erfassen der von dem kraftausübenden Element (14) aufgebrachten Kraft, wobei die erfaßte Kraft ein Maß für das von der Waage (10) zu ermittelnde Gewicht oder die zu ermittelnde Masse ist.

2. Vorrichtung nach Anspruch 1, dadurch gekennzeichnet, daß das Widerlager (13) als Brückenträger ausgebildet ist.

3. Vorrichtung nach Anspruch 1, dadurch gekennzeichnet, daß das kraftausübende Element (14) als Wagenheber eines Kraftfahrzeugs ausgebildet ist.

4. Vorrichtung nach Anspruch 1, dadurch gekennzeichnet, daß die Bezugsmasse der Waage (10) ein Fundament (25) ist, mit dem das Widerlager (13) über Verschraubungen (24a, 24b) verbunden ist.

5. Vorrichtung nach Anspruch 1, gekennzeichnet durch die Verwendung in einem Rollenprüfstand (11).

6. Vorrichtung nach Anspruch 5, dadurch gekennzeichnet, daß zwischen einer ersten und zweiten Rolle (17, 18) des Rollenprüfstands (11) ein Niveauausgleichsteil (16) vorgesehen ist zum Ausgleich eines Höhenunterschieds zwischen beiden Rollen (17, 18).

7. Vorrichtung nach Anspruch 6, dadurch gekennzeichnet, daß zum Höhenausgleich wenigstens eine Einstellschraube (19) vorgesehen ist.

8. Vorrichtung nach Anspruch 7, dadurch gekennzeichnet, daß die Einstellschraube (19) auf einer Auflage (20) aufliegt, die auf einer Rolle (17, 18) angeordnet ist.

9. Vorrichtung nach Anspruch 8, dadurch gekennzeichnet, daß das Niveauausgleichsteil (16) und die Auflage (20) über Führungen (21a, 21b) beweglich miteinander verbunden sind.
